Europäisches Patentamt
European Patent Office
Office européen des brevets

(11) Veröffentlichungsnummer: **0 276 737 A2**

# EUROPÄISCHE PATENTANMELDUNG

(21) Anmeldenummer: **88100744.7**

(51) Int. Cl.⁴: **C08F 222/40**

(22) Anmeldetag: **20.01.88**

(30) Priorität: **23.01.87 DE 3701900**

(43) Veröffentlichungstag der Anmeldung: **03.08.88 Patentblatt 88/31**

(84) Benannte Vertragsstaaten: **CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Ittemann, Peter, Dr.**
**Wilhelm-Busch-Strasse 87**
**D-6700 Ludwigshafen(DE)**
Erfinder: **Eisenbarth, Philipp, Dr.**
**Gutleutstrasse 12**
**D-6702 Bad Duerkheim(DE)**

(54) **Hitzehärtbare Formmassen.**

(57) Die Erfindung betrifft Bismaleinimidharze aus einem Bismaleinimid und einem mehrkernigen Alkenyl-oder Alkinylaren als Comonomeren. Die Bismaleinimidharze können zur Herstellung von Hochleistungsverbundwerkstoffen verwendet werden.

EP 0 276 737 A2

Xerox Copy Centre

## Hitzehärtbare Formmassen

Die Erfindung betrifft hitzehärtbare Formmassen auf Basis von Bismaleinimid-Harzen.

Bismaleinimidharze, die nach der DE-B-1 770 867 aromatische Diamine als Comonomere enthalten, weisen zwar nach dem Aushärten selbst bei Temperaturen über 200°C hervorragende mechanische und elektrische Eigenschaften auf, sie haben jedoch eine geringe Löslichkeit in üblichen Lösungsmitteln und ihre Aushärtungsprodukte sind sehr spröde.

Bismaleinimidharze, die nach der DE-A-2 459 925 Polyphenole als Comonomere enthalten, weisen eine ungenügende Zähigkeit und eine zu hohe Feuchtigkeitsabsorption auf.

Eine verbesserte Zähigkeit wird durch den Einsatz von zweikernigen Allylphenolen oder veretherten Allylphenolen erreicht, wie z.B. in der US-A-4 100 140 beschrieben. Diese Comonomeren weisen jedoch eine verhältnismäßig sehr niedrige Schmelzviskosität auf, wodurch sich beim Imprägnieren von Verstärkungsfasern Schwierigkeiten ergeben. Infolge der relativ kurzen Kettenlänge und des daraus resultierenden relativ großen Anteils an aliphatischen Strukturelementen besitzen diese Harze eine für bestimmte Anwendungen nicht ausreichende thermooxidative Beständigkeit.

Der Erfindung lag daher die Aufgabe zugrunde, Bismaleinimidharze bereitzustellen, welche die genannten Nachteile nicht aufweisen.

Diese Aufgabe wird durch die erfindungsgemäßen Harze, welche mehrkernige Comonomere enthalten, gelöst. Sie weisen eine gute Löslichkeit, eine günstige Schmelzviskosität und damit ein gutes Imprägnierverhalten auf. Ausgehärtete Formmassen zeigen eine gute Hitzebeständigkeit, ein günstiges Zähigkeitsverhalten und eine geringe Wasseraufnahme.

Den erfindungsgemäß einzusetzenden Comonomeren ist gemeinsam, daß sie mehr als zweikernige Verbindungen bzw. Gemische von Verbindungen sind und daß sie endständig je eine Alkenyl-bzw. Alkinylgruppe R aufweisen, wobei Allyl-(R = $CH_2=CH-CH_2-$) und Propenyl-(R = $CH_3-CH=CH-$) Gruppen bevorzugt sind.

Die Alkenyl-bzw. Alkinylarene A und B sind bevorzugt fünf-oder mehrkernige Verbindungen; Harze auf Basis von Biphenylgruppen enthaltenden Verbindungen ergeben bei der Härtung Formteile mit besonders hoher Wärmeformbeständigkeit und Steifigkeit. Ferner sind Carbonylgruppen enthaltende Comonomere gegenüber solchen mit Sulfonylgruppen bevorzugt, da sie zu Formteilen mit geringerer Wasseraufnahme führen.

Die Alkenyl-bzw. Alkinylarene A können hergestellt werden durch Umsetzung von difunktionellen aromatischen Verbindungen der Formel

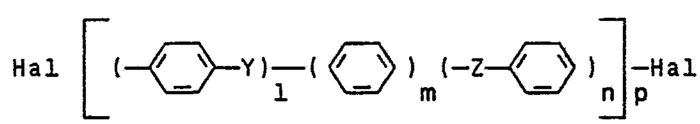

mit Monoalkenyl-bzw. Monoalkinylphenolen der Formel

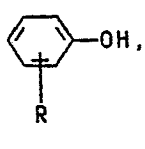

wobei die Symbole die in Anspruch 1 angegebene Bedeutung haben.

Geeignete Monoalkenylphenole sind z. B. 2-Allylphenol, 2-Propenylphenol, Eugenol, Isoeugenol, Vinylphenol, Propargylphenol und Ethinylphenol. Bevorzugt ist 2-Allylphenol.

Bevorzugte Dihalogenverbindungen sind:

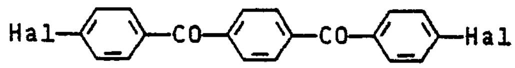

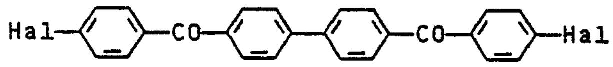

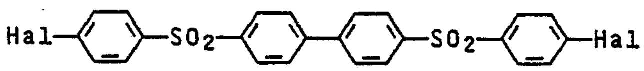,

wobei Hal = F oder Cl ist und

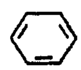

unsubstituiert ist.

Ferner sind geeignet:

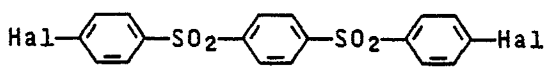

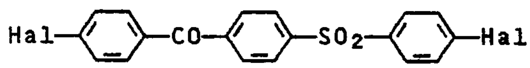

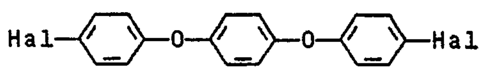

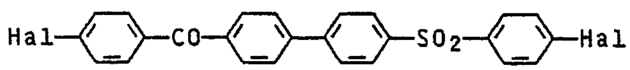

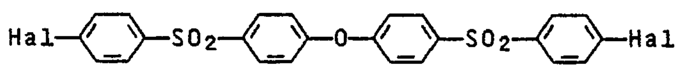

Der zuletzt genannte Dihalogenaromat ergibt z.B. nach Umsetzung mit einem Alkenylphenol ein Comonomer A mit n = 0 und p = 2.

Die Umsetzung erfolgt vorzugsweise bei Temperaturen zwischen 140 und 220°C in einem Lösungsmittel, z.B. Dimethylformamid, Dimethylacetamid, N-Methylpyrrolidon oder Dimethylsulfoxid, in Gegenwart einer Base, z.B. Kaliumcarbonat. Die Isolierung der Produkte geschieht durch übliches Extrahieren und Abdestillieren des Lösungsmittels. Als Besonderheit ist dabei zu bemerken, daß man beim Einsatz von 2-Alkenylphenolen in der Regel 1-Alkenylrene erhält, da unter den basischen Reaktionsbedingungen eine Isomerisierung der Doppelbindungen erfolgt. Die 1-Alkenylarene können auch als cis-trans-Isomerengemische vorliegen.

Die Alkenyl-bzw. Alkinylarene B können hergestellt werden durch Umsetzung von Bisphenolen mit Alkenyl-bzw. Alkinylhalogeniden, wie sie z.B. in der DE-A-28 18 091 beschrieben ist.

Bevorzugte Bisphenole sind:

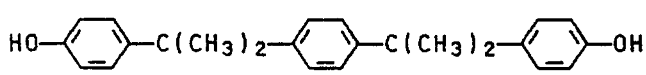

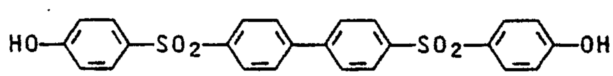

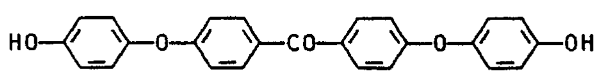

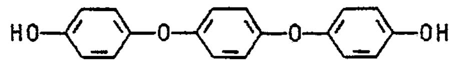

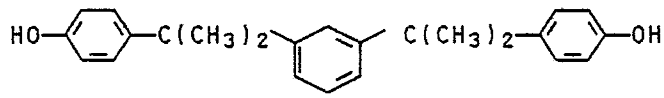

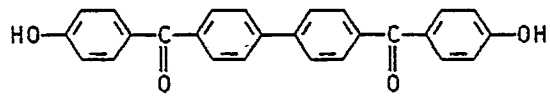

Geeignet sind ferner:

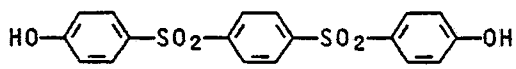

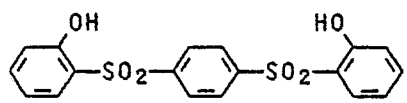

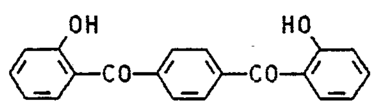

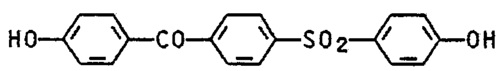

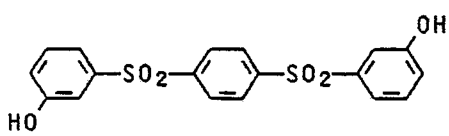

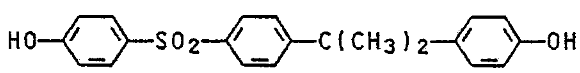

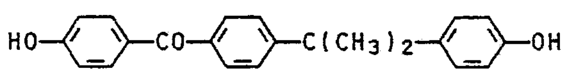

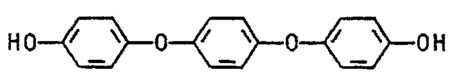

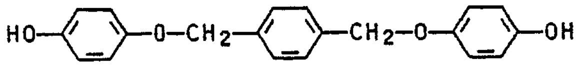

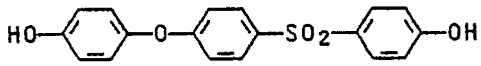

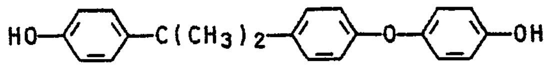

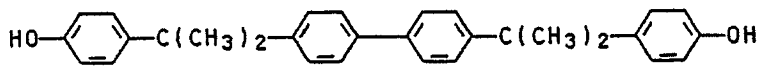

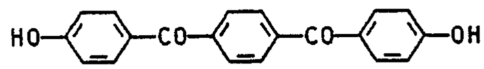

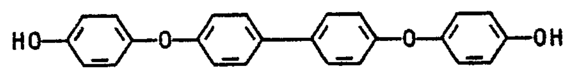

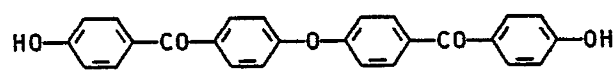

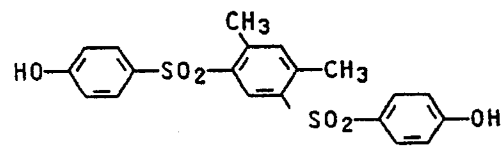

Geeignete Alkenyl-und Alkinylhalogenide sind Allylchlorid, Allylbromid, Methallylchlorid und Propargylchlorid, wobei Allylchlorid bevorzugt ist.

Die Allylierung der Bisphenole ergibt im allgemeinen zunächst die entsprechenden O-Allylphenolether (z.B. mit R′ = H, R″ = Allyl), die anschließend einer Claisen-Umlagerung unter Bildung der Alkenylarene (z.B. mit R′ = Allyl, R″ = H) unterworfen werden, wie ebenfalls in DE-A 28 18 091 beschrieben ist. Die so erhaltenen 2-Alkenylarene lassen sich schließlich in die entsprechenden, ebenfalls erfindungsgemäßen 1-Alkenylarene (z.B. mit R′ = Propenyl, R″ = H) überführen, z.B. nach EP-A 14 816.

Die erfindungsgemäßen Bismaleinimidharze werden erhalten durch Umsetzung der Alkenyl-bzw. Alkinylarene mit einem Bismaleinimid der allgemeinen Formel

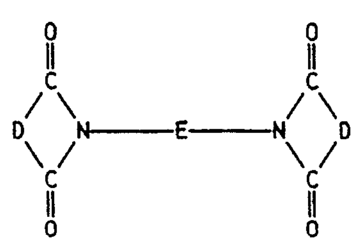

in der D eine gegebenenfalls substituierte Kohlenstoffdoppelbindung ist und E einen zweiwertigen Rest mit zumindest zwei Kohlenstoffatomen bedeutet. Bismaleinimide sind z.B. aus DE-A-2 040 094, DE-A-2 719 903 und DE-A-3 247 058 bekannt. Neben Bismaleinimiden sind grundsätzlich auch Polymaleinimide, sowie Mischungen verschiedener Bismaleinimide geeignet. Bevorzugte Bismaleinimide sind 4,4′-Bismaleinimidodiphenylmethan, 4,4′-Bismaleinimidodiphenylether, 3,3′-Bismaleinimidodiphenylsulfon, 1,3-Bismaleinimidobenzol, 2,4-Bismaleinimidotoluol, 1,6-Bismaleinimidohexan und 2,2,4-Trimethyl-1,6-bismaleinimidohexan. Es können auch bis zu 20 Gew.% eines Monoimids enthalten sein.

Das Mischungsverhältnis bei der Umsetzung des Bismaleinimids mit den Alkenyl-bzw. Alkinylarenen ist

relativ frei wählbar. wobei ein Äquivalent-Verhältnis von 1 zu 0.05 bis 5 vorzuziehen ist. Man nimmt an. daß bei der Umsetzung neben einer vermutlich radikalisch initiierten Copolymerisation auch Reaktionen vom Additionstyp, wie z.B. En-Reaktionen und Diels-Alder-Reaktionen ablaufen.

Je nach beabsichtigtem Verwendungszweck kann es vorteilhaft sein. den erfindungsgemäßen Harzen weitere Komponenten beizufügen. In Frage kommen beispielsweise übliche Epoxidharze oder Vinylesterharze.

Weitere einsetzbare Zusatzkomponenten sind Amine. bevorzugt aromatische Diamine (z.B. 4.4'-Diaminodiphenylmethan) und Aminophenole, die ebenfalls eine Additionsreaktion mit den Maleinimiddoppelbindungen eingehen können. Es können auch Präpolymere, z.B. aus einem Bisimid und einem Amin eingesetzt werden.

Für bestimmte Anwendungen kann es auch zweckmäßig sein, zur Einstellung einer gewünschten Viskosität geeignete Vinylmonomere, z.B. Styrol, $\alpha$-Methylstyrol, Divinylbenzol, Acryl-oder Methacrylsäureester, Diallylphthalat, 3,3'-Diallylbisphenol A, Triallylisocyanurat, Triallylcyanurat oder Vinylpyrrolidon einzusetzen. Ihr Anteil kann bis zu 50 Gew.%, bezogen auf die Mischung, betragen.

Die erfindungsgemäßen Mischungen können als weitere Zusätze Katalysatoren oder auch Inhibitoren enthalten. Geeignete Katalysatoren sind tertiäre Amine oder Phosphine, Imidazole oder organische Säuren oder Peroxide. Als Inhibitoren sind Hydrochinon, Benzochinon oder Phenothiazin zu nennen. Die Menge an eingesetzten Initiatoren und Inhibitoren soll etwa zwischen 0,05-1,5 Gew.% liegen.

Die erfindungsgemäßen Mischungen können weitere Zusätze. die in der Technologie der härtbaren Kunststoffe üblich sind, enthalten, wie Füllstoffe, Weichmacher. Pigmente. Farbstoffe, Formtrennmittel, flammhemmende Stoffe. Als Füllstoffe können auch Glas-und Kohlenstoffasern, Graphitpulver, Glimmer, Quarzpulver, Koalin oder Metallpulver bis zu einem Anteil von 80 Gew.%. bezogen auf die Mischung, verwendet werden.

Die erfindungsgemäßen Mischungen sind als Imprägnier-, Gieß-und Laminierharze oder als Formmassen (gefüllt oder ungefüllt) einsetzbar.

Dienen sie zur Herstellung von Hochleistungsverbundwerkstoffen, so kann die Tränkung von Glas-, Kohlenstoff-oder Aramidfasern unter Bildung von unidirektionalen oder Gewebeprepregs entweder aus der Schmelze bei 50 -150°C oder aus Lösung erfolgen. Geeignete Lösungsmittel sind halogenierte Kohlenwasserstoffe, wie z.B. Dichlormethan, Ketone wie z.B. Aceton oder Methylethylketon, Glykolester. Toluol, Dimethylformamid, N-Methylpyrrolidon bzw. Gemische aus mehreren Lösungsmitteln.

Zur Herstellung der erfindungsgemäßen Bismaleinimidharze werden die Ausgangsmaterialien unter Anwendung der üblichen Techniken vermischt und auf Temperaturen zwischen 70 - 190°C erhitzt. wobei die Bildung eines Präpolymeren erfolgt. Je nach Fortschritt der Vorpolymerisation erhält man eine hochviskose Schmelze oder einen glasartig erstarrten Feststoff, der je nach Verwendungszweck gemahlen oder in einem Lösungsmittel gelöst wird. Die Herstellung der Harze kann auch in einem der oben genannten Lösungsmittel erfolgen.

Die Härtung der erfindungsgemäßen Harze erfolgt bei Temperaturen von ca. 100 - 300°C. gegebenenfalls unter Druck, vorzugsweise zwischen 160 - 260°C. Die gewählte Härtungstemperatur hängt entscheidend von der Länge der Härtungszeit ab und umgekehrt. Vielfach ist eine stufenweise Härtung vorteilhaft, wobei bei einer niedrigeren Temperatur zunächst unter Formgebung eine Vernetzung der Polymeren herbeigeführt wird. Nach Entformen kann sich dann zur vollständigen Aushärtung eine unter Umständen mehrstündige Nachhärtung oberhalb 200°C anschließen.

Aus den erfindungsgemäßen Harzen können Hochleistungswerkstoffe, z.B. Isoliermaterialien, Strukturbauteile, Apparategehäuse und elektrische Bauteile hergestellt werden, die hohen Temperaturen ausgesetzt sind.

Beispiel 1

a) Herstellung eines Alkenylarens des Typs A

(X, Q = O, Y, Z = $SO_2$, I, n = 1, m = 2, R = Propenyl, p = 1)

83,2 g (0,165 mol) 4,4'-Bis(4-chlorphenylsulfonyl)biphenyl, 44,35 g (0,33 mol) 2-Allylphenol und 25,12 g Kaliumcarbonat wurden mit 600 ml N-Methylpyrrolidon (NMP) und 100 ml Chlorbenzol versetzt. Das Reaktionsgemisch wurde unter ständigem Rühren auf 190°C erhitzt und das entstehende Reaktionswasser als Azeotrop 4 Stunden bei dieser Temperatur durch einen Stickstoffstrom in einen Wasserabscheider übergetrieben. Das Reaktionsgemisch wurde anschließend in 5 Liter Wasser gegossen und die organische

Phase abgetrennt. Die wäßrige Phase wurde zweimal mit insgesamt 2 Liter Dichlormethan extrahiert. Die vereinigten organischen Phasen wurden anschließend in einem Flüssig Flüssig-Extraktor mit Wasser gewaschen, getrocknet und im Vakuum eingedampt. Man erhielt 71 g (64 %) Alkenylaren mit Erweichungspunkt 95°C (Koflerbank): $^1$H-NMR (270 MHz, $D_6$-DMSO): 1,72 (d, 6H), 5,70-5.80 (m), 6.25-6.42 (m, 4H), 6.95-7.15 (m, 6H), 7.20-7.40 (m, 4H), 7.60-7.80 (m, 2H), 7.90-8.15 (m, 12H).

b) Herstellung eines Bismaleinimidharzes

In einem Reaktionsgefäß wurden unter Rühren bei einer Badtemperatur von 170°C 20 g Alkenylaren, 80 g 4,4'-Bismaleinimidodiphenylmethan und 0,2 g 2,6-Dimethylhydrochinon aufgeschmolzen. Die flüssige, homogene Harzmasse wurde nach 15-minütigem Erhitzen wie folgt weiterverarbeitet:

1) Ein Teil des Harzes wurde zwecks schnelleren Abkühlens auf eine Metallfolie ausgegossen. Das erhaltene gelbbraune Harz besaß folgende Eigenschaften: Erweichungspunkt: 69°C ; Viskosität bei 150°C : 120 mPas; Gelzeit bei 160°C: 34 min.

2) Der restliche Teil der Harzmasse wurde in eine 10 x 10 x 0,1 cm große Metallform gegossen und 2 Stunden bei 160°C, 2 Stunden bei 190°C und 10 Stunden bei 240°C gehärtet. Das Polymer besaß eine Glasübergangstemperatur oberhalb von 300°C (nach DIN 53 445); sein Schubmodul betrug bei 335°C noch 900 N/mm$^2$ (DIN 53 445); nach 24-stündiger Lagerung in kochendem Wasser betrug die Wasserabsorption 3.92 %.

Vergleichsbeispiel

Analog Beispiel 1b) wurde ein Bismaleinimidharz aus 0,2 g 2,6-Dimethylhydrochinon, 80 g 4,4'-Bismaleinimidodiphenylmethan und 20 g 4,4'-Bis(o-propenylphenoxy)diphenylsulfon [erhältlich aus 1 Moläquiv. 4,4'-Dichlordiphenylsulfon und 2 Moläquiv. o-Allyphenol nach der Methode von Beispiel 1a)] hergestellt und gehärtet. Der Schubmodul des Polymeren betrug bei 295°C noch 900 N/mm$^2$ (DINH 53 445); seine Wasserasorption betrug 4,27 %.

Beispiel 2

a) Herstellung eines Alkenylarens des Typs A

(X, Q = 0, Y, Z = CO; l, n, m = 1, r = Propenyl, p = 1)

219 g (0,735 mol) 1,4-Bis(4-fluorbenzoyl)benzol, 197,6 g (1,47 mol) 2-Allylphenol und 111,9 g Kaliumcarbonat wurden analog Beispiel 1a) in 1100 ml N-Methylpyrrolidon umgesetzt. Man erhielt 339 g (88 %) Alkenylaren mit Erweichungspunkt 142°C; $^1$H-NMR (270 MHz, $D_6$-DMSO): 1.82 (d, 6H), ca. 5.80 (m), 6.35-6.50 (m.4H), 6.95-7.40 (m), 7.70-7.90 (m); Doppelbindungsgehalt: 93.8 %.

b) Herstellung eines Bismaleinimidharzes

Aus 80 g 4,4'-Bismaleinimidodiphenylmethan und 20 g Alkenylaren wurde analog Beispiel 1b) ein Bismaleinimidharz hergestellt; Erweichungspunkt: 71°C.

Beispiel 3

a) Herstellung eines Alkenylarens des Typs B

(X, Q = $C(CH_3)_2$, l, n = 0, m = 1, p = 1, R' = Allyl)

Zur Lösung von 19,1 g 1,4-Bis[2-(4-hydroxyphenyl)propyl]benzol und 4,1 g Natriumhydroxid in 150 ml n-Propanolw wurden bei 100°C innerhalb 30 Minuten 9,77 ml Allylchlorid zugetropft. Man erhitzte die Mischung 6 Stunden unter Rückfluß und filtrierte nach Abkühlen auf Raumtemperatur das ausgefallene

Natriumchlorid ab. Nach Abdestillieren des Lösungsmittels im Vakuum erhielt man 21.2 g (91 %) des entsprechenden O-Allylethers als farblosen Feststoff mit Fp. 64-67°C; $^1$H-NMR ($D_6$-DMSO, 270 MHz): 1.60 (s, 12 H), 4.43 (d, 4 H), 5.20 (d, 2 H), 5.34 (d, 2 H), 5.98 (m, 2 H), 6.78 (d, 4 H), 7.08 (s, 4 H), 7.12 (d, 4 H).

21.2 g des O-Allylethers wurden anschließend 3 Stunden lang bei 200°C und einem Vakuum von ca. 1 mbar erhitzt. Man erhielt 20.5 g (97 %) 1,4-Bis(2-[4-hydroxy-3-allylphenyl]propyl)benzol als hochviskoses Öl. $^1$H-NMR ($D_6$-DMSO, 270 MHz): 1.56 (s, 12 H), 3.23 (d, 4 H), 4, 95 (m, 4 H), 5.90 (m, 2 H), 6.65-6.90 (m, 6 H), 7.05 (s, 4 H), 9.02 (s, 2 H).

b) Herstellung eines Bismaleinimidharzes

In einem Reaktionsgefäß wurden unter Rühren bei einer Badtemperatur von 150°C 60 g 4.4'-Bismaleinimidodiphenylmethan, 15 g des Allylphenols und 0,2 g Hydrochinon aufgeschmolzen. Die flüssige Harzmasse wurde nach 25-minütigem Erhitzen wie folgt weiterverarbeitet:

Ein Teil der Harzmasse wurde zum schnelleren Abkühlen auf eine Metallfolie ausgegossen. Das erhaltene Harz besaß einen Erweichungspunkt von 44°C (Koflerbank); seine Gelzeit bei 160°C betrug 32 Minuten.

Der restliche Teil der Harzmasse wurde in zwei 30 x 30 x 0.4 bzw. 0,1 cm große Metallformen gegossen und 2 Stunden bei 160°C, 2 Stunden bei 190°C und 8 Stunden bei 240°C gehärtet. Das Polymer besaß eine Glasübergangstemperatur oberhalb von 300°C (nach DIN 53 445); seine Schlagzähigkeit betrug 18,3 $kJ/m^2$ (DIN 53 453). Nach 24-stündiger Lagerung in kochendem Wasser war die Wasserabsorption 3,32 %.

Vergleichsbeispiel

Analog Beispiel 3b) wurde nach US-A-4 100 140 ein Bismaleinimidharz aus 0,2 g Hydrochinon, 15 g o,o-Diallylbisphenol A und 60 g 4,4'-Bismaleinimidodiphenylmethan hergestellt und gehärtet. Seine Wasserabsorption betrug 4,77 %. Die Schlagzähigeit betrug 9,4 $kJ/m^2$ (DIN 53 453).

Beispiel 4

a) Herstellung eines Alkenylarens des Typs B

(X, Q = 0, Y = CO, l, m = 1, n = 0, p = 1, R' = Allyl)

Analog Beispiel 3a) wurden 199 g (0,5 mol) 4,4'-Bis(4-hydroxyphenoxy)benzophenon, 97,6 ml (1,2 mol) Allylchlorid, 43,8 g Natriumhydroxid in 650 ml n-Propanol umgesetzt. Man erhielt 213 g (89 %) des O-Allylethers, dessen Claisenumlagerung 211 g (88 %) Alkenylaren lieferte.

b) Herstellung eines Bismaleinimidharzes

Aus 160 g 4,4'-Bismaleinimidodiphenylmethan, 40 g Alkenylaren, 0,4 g Dimethylhydrochinon und 0,2 g Triphenylphosphin wurde analog Beispiel 1b) ein Harz hergestellt; Erweichungspunkt: 72°C; Gelzeit (160°C): 40 min; Glasübergangstemperatur des Polymeren: 305°C.

## Ansprüche

1. Hitzehärtbare Formmassen, enthaltend ein Bismaleinimid und ein Alkenyl-oder Alkinylgruppen enthaltendes Comonomeres, dadurch gekennzeichnet, daß das Comonomere ausgewählt ist aus Verbindungen der Formeln

A) 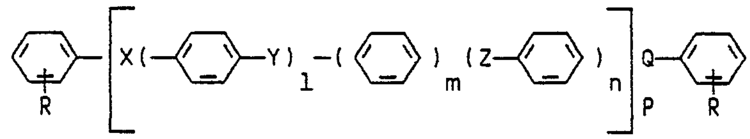 ,

wobei die Symbole folgende Bedeutung haben:

-X, Y, Z und Q können CO, $SO_2$, O, $CH_2O$ oder $C(R^*)_2$ (mit $R^*$ = $C_1$-$C_5$-Alkylrest) bedeuten;

-l und n können 0 oder 1 sein;

-m kann 1 oder 2 sein;

-p kann eine ganze Zahl zwischen 1 und 10 sein;

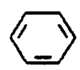

ist ein Benzolkern, der gegebenenfalls durch $C_1$-$C_5$-Alkyl-, Alkoxy-, Aryl-, Halogen-oder Nitrogruppen substituiert sein kann;

-R ist ein Alkenyl-oder Alkinylrest mit 2 bis 6 C-Atomen; mit der Maßgabe, daß die Comonomeren A mindestens 5-kernig sind.

B) 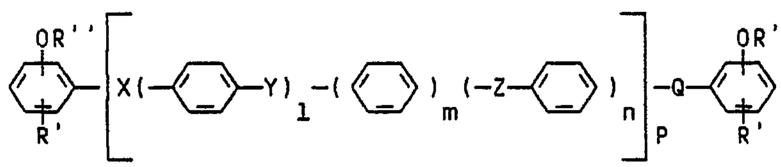 ,

wobei die Symbole die gleiche Bedeutung wie bei A haben, und wobei entweder R″ = R und R′ = H oder R′ = R und R″ = H ist.

2. Hitzehärtbare Formmassen nach Anspruch 1, dadurch gekennzeichnet, daß in den Formeln A und B l und m = 1, n = 0 und p = 1 sind.

3. Hitzehärtbare Formmassen nach Anspruch 1, dadurch gekennzeichnet, daß in den Formeln A und B m = 2 ist.